(19) Europäisches Patentamt
European Patent Office
Office européen des brevets

(11) EP 1 564 249 B1

(12) EUROPEAN PATENT SPECIFICATION

(45) Date of publication and mention
of the grant of the patent:
23.09.2009 Bulletin 2009/39

(51) Int Cl.:
C08L 51/06 (2006.01)    C08L 55/02 (2006.01)

(21) Application number: 03774090.9

(86) International application number:
PCT/JP2003/014799

(22) Date of filing: 20.11.2003

(87) International publication number:
WO 2004/046243 (03.06.2004 Gazette 2004/23)

(54) THERMOPLASTIC RESIN COMPOSITION, THERMOPLASTIC RESIN COMPOSITION FOR EXTERIOR AUTOMOTIVE MOLDING, EXTERIOR AUTOMOTIVE MOLDING, AND PROCESS FOR PRODUCING EXTERIOR AUTOMOTIVE MOLDING

THERMOPLASTHARZZUSAMMENSETZUNG, THERMOPLASTHARZZUSAMMENSETZUNG FÜR AUTOAUSSENFORMTEIL, AUTOAUSSENFORMTEIL UND VERFAHREN ZUR HERSTELLUNG VON AUTOAUSSENFORMTEIL

COMPOSITION DE RESINE THERMOPLASTIQUE, COMPOSITION DE RESINE THERMOPLASTIQUE POUR PIECE MOULEE EXTERIEURE D'AUTOMOBILE, PIECE MOULEE EXTERIEURE D'AUTOMOBILE, ET PROCEDE DE PRODUCTION DE PIECE MOULEE EXTERIEURE D'AUTOMOBILE

(84) Designated Contracting States:
DE

(30) Priority: 21.11.2002 JP 2002338579

(43) Date of publication of application:
17.08.2005 Bulletin 2005/33

(73) Proprietor: Techno Polymer Co., Ltd.
Tokyo 104-0031 (JP)

(72) Inventors:
• HIGAKI, Keigo
Chuo-ku, Tokyo 104-0041 (JP)
• NAGAHARA, Tadashi
Chuo-ku, Tokyo 104-0041 (JP)
• KASHIWAGI, Hiroki
Chuo-ku, Tokyo 104-0041 (JP)

(74) Representative: TBK-Patent
Bavariaring 4-6
80336 München (DE)

(56) References cited:
EP-A- 0 071 099        EP-A- 0 483 832
WO-A-95/29204          DE-A1- 2 901 576
JP-A- 7 011 099        JP-A- 9 143 340
JP-A- 9 302 197        JP-A- 2002 256 043

**Description**

TECHNICAL FIELD

The present invention relates to a thermoplastic resin composition that is a suitable molding material for an automobile exterior part or other industrial member, to a thermoplastic resin composition for an automobile exterior molded article, to an automobile exterior molded article, and to a manufacturing method for an automobile exterior molded article. Specifically, the present invention relates to a thermoplastic resin composition that yields a molded article having excellent coating properties, weather resistance, peel properties, and flexibility, a reduced coefficient of linear expansion, and excellent dimensional precision, to a thermoplastic resin composition for an automobile exterior molded article, to an automobile exterior molded article, and to a manufacturing method for an automobile exterior molded article.

BACKGROUND ART

Flexible thermoplastic resin compositions are known in the prior art (see JP-A-5-171006, for example). These thermoplastic resin compositions are mixtures of a conjugated diolefin rubber reinforced resin in which the content of conjugated diolefin rubber components is 30 to 80 mass%, and a specific thermoplastic copolyester resin.
The thermoplastic resin compositions are flexible but are inadequate with respect to coating properties, weather resistance, peel properties, and dimensional precision of a molded article thereof.

DISCLOSURE OF THE INVENTION

An object of the present invention is to overcome the aforementioned drawbacks and to provide a thermoplastic resin composition whereby a molded article having excellent flexibility, coating properties, weather resistance, peel properties, dimensional precision, and other properties is obtained by admixing an acrylic rubber reinforced resin, a diene rubber reinforced resin, and an AS resin in a specific range, and setting the content of bonded vinyl cyanide in the acetone-soluble fraction in the admixture to a specified range with respect to the acetone-soluble fraction in the admixture.
Another object of the present invention is to provide a thermoplastic resin composition for an automobile exterior molded article that is suitable for obtaining a molded article for an automobile exterior having excellent flexibility, coating properties, weather resistance, peel properties, dimensional precision, and other properties.
Yet another object of the present invention is to provide a molded article for an automobile exterior having excellent flexibility, coating properties, weather resistance, peel properties, dimensional precision, and other properties.
Still another object of the present invention is to provide a manufacturing method for an automobile exterior molded article having the aforementioned characteristics.
The present invention is as described below.

(1) A thermoplastic resin composition (hereinafter referred to as "thermoplastic resin composition 1"), wherein the composition comprises 40 to 90 mass% of component [A], 0 to 40 mass% of component [B], and 0 to 60 mass% of component [C] below (where at least one of component [B] and component [C] is contained therein, and the total content of component [A], component [B], and component [C] is 100 mass%); the total content of the acrylic rubber polymer (a1) constituting component [A] below and the diene rubber polymer (b1) constituting component [B] below is 15 to 50 mass% with respect to the total quantity of the thermoplastic resin composition; the content of bonded vinyl cyanide compounds in the acetone-soluble fraction of the thermoplastic resin composition is 27 to 50 mass% with respect to the acetone-soluble fraction; the coefficient of linear expansion is $10 \times 10^{-5}/°C$ or less; and the flexural modulus according to ISO 178 is 1000 to 2200 MPa.

Component [A]: An acrylic rubber reinforced resin obtained by polymerizing 30 to 95 mass% of a vinyl monomer (a2) comprising an aromatic vinyl compound and a vinyl cyanide compound in the presence of 5 to 70 mass% of an acrylic rubber polymer (a1) (where the total content of (a1) and (a2) is 100 mass%).
Component [B]: A diene rubber reinforced resin obtained by polymerizing 30 to 95 mass% of a vinyl monomer (b2) comprising an aromatic vinyl compound and a vinyl cyanide compound in the presence of 5 to 70 mass% of a diene rubber polymer (b1) (where the total content of (b1) and (b2) is 100 mass%).
Component [C]: A copolymer of a vinyl monomer (c2) comprising an aromatic vinyl compound and a vinyl cyanide compound.

(2) A thermoplastic resin composition (hereinafter referred to as "thermoplastic resin composition 2"), wherein the composition comprises 40 to 90 mass% of component [A], 0 to 40 mass% of component [B], 5 to 60 mass% of component [D], and 0 to 30 mass% of component [E] below (where the total content of component [A], component [B], component [D], and component [E] is 100 mass%); the total content of the acrylic rubber polymer (a1) constituting component [A] below and the diene rubber polymer (b1) constituting component [B] below is 15 to 50 mass% with respect to the total quantity of the thermoplastic resin composition; the coefficient of linear expansion is $10 \times 10^{-5}/$ ˚C or less; and the flexural modulus according to ISO 178 is 1000 to 2200 MPa.

Component [A]: An acrylic rubber reinforced resin obtained by polymerizing 30 to 95 mass% of a vinyl monomer (a2) comprising an aromatic vinyl compound and a vinyl cyanide compound in the presence of 5 to 70 mass% of an acrylic rubber polymer (a1) (where the total content of (a1) and (a2) is 100 mass%).

Component [B]: A diene rubber reinforced resin obtained by polymerizing 30 to 95 mass% of a vinyl monomer (b2) comprising an aromatic vinyl compound and a vinyl cyanide compound in the presence of 5 to 70 mass% of a diene rubber polymer (b1) (where the total content of (b1) and (b2) is 100 mass%).

Component [D]: A copolymer of a vinyl monomer (d2) comprising an aromatic vinyl compound and a vinyl cyanide compound, wherein the bonded vinyl cyanide content is 30 to 50 mass%.

Component [E]: A copolymer of a vinyl monomer (e2) comprising an aromatic vinyl compound and a vinyl cyanide compound, wherein the bonded vinyl cyanide content is less than 30 mass%.

(3) A thermoplastic resin composition for an automobile exterior molded article, characterized in comprising the thermoplastic resin composition according to (1) or (2) above.

(4) An automobile exterior molded article, characterized in being obtained by molding the thermoplastic resin composition according to (1) or (2) above.

(5) A manufacturing method for an automobile exterior molded article, characterized in molding the thermoplastic resin composition according to (1) or (2) above and manufacturing an automobile exterior molded article.

(6) The manufacturing method for an automobile exterior molded article according to (5) above, wherein the molding is performed by injection molding, sheet extrusion molding, vacuum molding, profile extrusion molding, compression molding, hollow molding, differential pressure molding, blow molding, structural foaming, or gas injection molding.

The thermoplastic resin composition of the present invention has excellent coating properties, weather resistance, peel properties, and flexibility, and has a low coefficient of linear expansion; therefore, excellent dimensional precision and other characteristics are obtained in a molded article thereof.

Since the thermoplastic resin composition for an automobile exterior molded article of the present invention has excellent flexibility, coating properties, weather resistance, peel properties, dimensional precision, and other characteristics, it can be used to obtain a molded article for an automobile exterior.

The automobile exterior molded article of the present invention has excellent flexibility, coating properties, weather resistance, peel properties, dimensional precision, and the like.

With the manufacturing method for an automobile exterior molded article of the present invention, an automobile exterior molded article having the aforementioned excellent characteristics can be obtained.

DISCLOSURE OF THE INVENTION

The present invention will be described in detail hereinafter.

First, the acrylic rubber polymer (a1) of component [A] constituting thermoplastic resin compositions 1 and 2 will be described. The vinyl monomer (a2) used in the presence of the acrylic rubber polymer (a1) in the manufacture of component [A] will be described hereinafter.

1. Acrylic rubber polymer (a1)

The acrylic rubber polymer (a1) is a (co)polymer obtained by polymerizing an alkyl (meth)acrylate ester monomer. One type or two or more types of acrylic rubber monomers having different compositions (monomer type, quantity, and the like) may be used in the acrylic rubber polymer (a1).

The structure and manufacturing method of the acrylic rubber polymer (a1) are not subject to any particular limitation. For example, the acrylic rubber polymer (a1) is preferably manufactured by a known emulsion polymerization method using water as a solvent. The acrylic rubber polymer (a1) is preferably (1) a (co)polymer of an alkyl (meth) acrylate ester monomer whose alkyl groups have a carbon number of 1 to 8, or (2) a copolymer of this alkyl (meth) acrylate ester monomer with a vinyl monomer copolymerizable therewith.

Specific examples of the alkyl acrylate ester monomer whose alkyl groups have a carbon number of 1 to 8 are methyl acrylate, ethyl acrylate, propyl acrylate, *n*-butyl acrylate, *i*-butyl acrylate, amyl acrylate, hexyl acrylate, *n*-octyl acrylate, 2-ethylhexyl acrylate, cyclohexyl acrylate, and the like. Specific examples of the alkyl methacrylate ester monomer whose alkyl groups have a carbon number of 1 to 8 are methyl methacrylate, ethyl methacrylate, propyl methacrylate, *n*-butyl methacrylate, *i*-butyl methacrylate, amyl methacrylate, hexyl methacrylate, *n*-octyl methacrylate, 2-ethylhexyl methacrylate, cyclohexyl methacrylate, and the like. Among these monomers, *n*-butyl acrylate and 2-ethylhexyl acrylate are preferred. These monomers may also be used singly or in combinations of two or more types thereof.

Examples of vinyl monomers that can be copolymerized with the alkyl (meth)acrylate ester monomer are polyfunctional vinyl monomers, aromatic vinyl monomers, vinyl cyanide monomers, and the like. The polyfunctional vinyl monomer is a monomer that has two or more vinyl groups per monomer molecule, has the function of crosslinking the (meth)acrylic copolymer, and plays a role in starting the reaction during graft polymerization. Specific examples of the polyfunctional vinyl monomer are divinyl benzene, divinyl toluene, and other polyfunctional aromatic vinyl monomer; and (poly)ethylene glycol dimethacrylate, trimethylolpropane triacrylate, and other (meth)acrylic acid esters of polyhydric alcohols; as well as diallyl malate, diallyl fumarate, triallyl cyanate, triallyl isocyanate, diallyl phthalate, allyl methacrylate, and the like. These polyfunctional vinyl monomers may be used singly or in combinations of two or more types thereof. Specific examples of the aromatic vinyl monomers are styrene, *p*-methyl styrene, alpha-methyl styrene, and the like. These monomers may be used singly or in combinations of two or more types thereof. Furthermore, specific examples of the vinyl cyanide monomers are acrylonitrile, methacrylonitrile, and the like. These monomers may be used singly or in combinations of two or more types thereof.

The preferred monomer unit composition in the acrylic rubber polymer (a1) is 80 to 99.99 mass% (more preferably 90 to 99.5 mass%) of units of the alkyl (meth)acrylate ester monomer whose alkyl groups have a carbon number of 1 to 8; 0.01 to 5 mass% (more preferably 0.1 to 2.5 mass%) of polyfunctional vinyl monomer units; and 0 to 15 mass% (more preferably 0 to 7.5 mass%) of other vinyl monomer units that are copolymerizable therewith. The monomer composition constitutes a total of 100 mass%.

The acrylic rubber polymer (a1) is an aggregate of particles having different particle diameters. The overall average particle diameter of the acrylic rubber polymer (a1) is preferably 80 to 700 nm, more preferably 100 to 650 nm, and more preferably 150 to 500 nm. When the average particle diameter of the acrylic rubber polymer (a1) is within this range, a thermoplastic resin composition is obtained that is markedly superior in the target performance. The particle diameter is the value for the acrylic rubber polymer used to manufacture component [A] (acrylic rubber reinforced resin). The particle diameter of the acrylic rubber polymer dispersed in the acrylic rubber reinforced resin [A] of the present invention is confirmed by electron microscopy to be substantially equal to that of the acrylic rubber polymer.

The glass transition temperature (Tg) of the acrylic rubber polymer (a1) is preferably 10˚C or below, more preferably 0˚C or below, and more preferably -10˚C or below. A Tg that is too high is not preferred because the impact resistance of the molded article is reduced.

The gel content of the acrylic rubber polymer (a1) is preferably 50 to 100 mass%, more preferably 60 to 99 mass%, and more preferably 70 to 98 mass%. When the gel content is in this range, the flexibility that is an object of the present invention is ensured and the coefficient of linear expansion is low, making it possible to obtain a thermoplastic resin composition whose balance of qualities is even further enhanced.

The diene rubber polymer (b1) of the diene rubber reinforced resin [B] constituting thermoplastic resin compositions 1 and 2 will next be described. The vinyl monomer (b2) used in the presence of the diene rubber polymer (b1) in the manufacture of component [B] will be described hereinafter.

2. Diene rubber polymer (b1)

Examples of the diene rubber polymer (b1) for forming the component [B] are natural rubber, polyisoprene, polybutadiene, styrene/butadiene copolymer, butadiene/acrylonitrile copolymer, isobutylene/isoprene copolymer, aromatic vinyl monomer/conjugated diene block copolymer (specific examples of which are styrene/butadiene block copolymer, styrene/isoprene/styrene block copolymer, styrene/butadiene/styrene block copolymer, etc.), and the like.

The diene rubber polymer is preferably manufactured by emulsion polymerization and solution polymerization methods, and an emulsion polymerization method is particularly preferred.

3. Vinyl monomers (a2), (b2), (c2), (d2), and (e2)

The vinyl monomers (a2), (b2), (c2), (d2), and (e2) (hereinafter referred to simply as "vinyl monomers") used for manufacturing components [A], [B], and [C] of thermoplastic resin composition 1 and components [A], [B], [D] and [E] of thermoplastic resin composition 2 will be described.

The vinyl monomers may be the same or different in the thermoplastic resin composition of the present invention. The constituent ratios (content ratios) of the vinyl monomers may also be the same or different in the thermoplastic resin composition of the present invention.

The vinyl monomers are vinyl monomers comprising aromatic vinyl monomers and vinyl cyanide monomers. The vinyl monomers may also comprise other vinyl monomers.

Specific examples of the aromatic vinyl monomers are styrene, *p*-methyl styrene, alpha-methyl styrene, and the like. These monomers may be used singly or in combinations of two or more types thereof.

Specific examples of the vinyl cyanide monomers are acrylonitrile, methacrylonitrile, and the like. These monomers may be used singly or in combinations of two or more types thereof.

Examples of the other vinyl monomers are (meth)acrylic acid ester monomers, maleimide monomers, and the like. Furthermore, these monomers may be vinyl monomers and the like having epoxy, hydroxyl, carboxylic acid, amino, amide, and oxazoline groups. In this case, the monomer may have only one type of these functional groups in its structure, or may have two or more types thereof.

Specific examples of the acrylic acid ester monomers are methyl acrylate, ethyl acrylate, propyl acrylate, *n*-butyl acrylate, *i*-butyl acrylate, amyl acrylate, hexyl acrylate, n-octyl acrylate, 2-ethylhexyl acrylate, cyclohexyl acrylate, and the like. Specific examples of the alkyl methacrylate ester monomers are methyl methacrylate, ethyl methacrylate, propyl methacrylate, *n*-butyl methacrylate, *i*-butyl methacrylate, amyl methacrylate, hexyl methacrylate, *n*-octyl methacrylate, 2-ethylhexyl methacrylate, cyclohexyl methacrylate, and the like. Among these monomers, methyl methacrylate is preferred. These monomers may be used singly or in combinations of two or more types thereof.

The maleimide monomers include ***N***-alkyl maleimides whose alkyl groups have a carbon number of 1 to 4, ***N***-phenyl maleimide, ***N***-(p-methylphenyl)maleimide, ***N***-cyclohexyl maleimide, and the like. These monomers may be used singly or in combinations of two or more types thereof. The maleimide monomers may be introduced by a method for copolymerizing and imidizing a maleic acid anhydride.

Vinyl monomers having the functional groups include glycidyl methacrylate, glycidyl acrylate, 2-hydroxyethyl methacrylate, 2-hydroxyethyl acrylate, acrylic acid, methacrylic acid, acrylamide, vinyl oxazoline, and the like. These monomers may be used singly or in combinations of two or more types thereof.

The (meth)acrylic acid ester monomers of vinyl monomers give the molded article transparency and clearness, and enhance the coloration properties thereof. Furthermore, resistance to heat deformation can be enhanced by using a maleimide monomer.

4. Constituent components (components [A], [B], [C], [D], and [E]) of the thermoplastic resin composition

The total content of the aromatic vinyl compound and the vinyl cyanide compound used for forming the components [A], [B], and [C] is preferably 40 to 100 mass%, more preferably 50 to 100 mass%, wherein the total content of the vinyl monomers is 100 mass%. The remaining monomers are vinyl monomers other than aromatic vinyl compounds and vinyl cyanide compounds. A content of aromatic vinyl compounds and vinyl cyanide compounds that is too low is not preferred because the molding workability and coating properties are adversely affected. A copolymer of a free vinyl monomer not grafted onto the rubber polymer is usually contained in component [A] and component [B], but the component [C] is not derived from the components [A] and [B], and is a component that is added as needed.

In the vinyl monomers (a2), (b2), and (c2), the ratio of the aromatic vinyl compound to the vinyl cyanide compound, wherein the total content of the vinyl monomers is 100 mass parts, is preferably 50 to 90 mass parts/10 to 50 mass parts, respectively, and more preferably 55 to 85 mass parts/15 to 45 mass parts, respectively. An excellent physical balance between molding workability, coating properties, and impact resistance is obtained when this ratio is in this range.

The total content of the aromatic vinyl compound and vinyl cyanide compound used for manufacturing each of the components [D] and [E] constituting the thermoplastic resin composition 2 of the present invention is preferably 40 to 100 mass%, more preferably 50 to 100 mass%, wherein the total content of vinyl monomers is 100 mass%. Too low a content of the aromatic vinyl compound and the vinyl cyanide compound is not preferred because the molding workability and coating properties are adversely affected. A copolymer of a free vinyl monomer not grafted onto the rubber polymer is usually contained in component [A] and component [B], but the components [D] and [E] are not derived from the components [A] and [B], and are added separately from the components [A] and [B].

The bonded vinyl cyanide content of component [D] is 30 to 50 mass%, wherein the total content of the vinyl monomers is 100 mass%. This content is preferably 30 to 45 mass%, and more preferably 31 to 45 mass%. When this content is less than 30 mass%, peeling defects occur in the molded article, and coating properties are adversely affected. A content of more than 50 mass% is also not preferred because the molding workability and the hue of the molded article are adversely affected.

The bonded vinyl cyanide content in component [E] is less than 30 mass%, wherein the total content of the vinyl monomers is 100 mass%.

In the vinyl monomers (a2), (b2), (c2), (d2), and (e2), the content ratio when a vinyl monomer having the aforementioned functional groups is used is preferably 0.1 to 15 mass%, more preferably 0.2 to 10 mass%, wherein the total content of the vinyl monomers is 100 mass%. When this content is less than 0.1 mass%, the effects of adding the vinyl monomer having the functional groups are sometimes not obtained, whereas adverse effects brought about by the functional groups occur if this content is over 15 mass%.

The total content of the rubber polymers (a1) and (b1) contained in the thermoplastic resin composition 1 of the present invention is 15 to 50 mass% with respect to the total quantity of the thermoplastic resin composition as a whole. This quantity is preferably 15 to 45 mass%, and more preferably 15 to 40 mass%. Flexibility suffers if this quantity is less than 15 mass%, whereas molding workability declines if this quantity is over 50 mass%.

The total content of both rubber polymers (a1) and (b1) contained in the thermoplastic resin composition 2 of the present invention is 15 to 50 mass% with respect to the total quantity of the thermoplastic resin composition as a whole. This quantity is preferably 15 to 45 mass%, and more preferably 15 to 40 mass%. Flexibility suffers if this quantity is less than 15 mass%, whereas molding workability declines if this quantity is over 50 mass%.

The graft ratio of the components [A] and [B] is 5 to 150 mass%, preferably 10 to 120 mass%, and more preferably 20 to 100 mass%. The surface appearance of the molded article is adversely affected if the graft ratio is too small, whereas impact resistance suffers if the graft ratio is too large. The term "graft ratio (%)" used herein is the ratio of monomer components grafted onto the rubber polymer, and is a value found from the following equation:

$$\text{Graft ratio (\%)} = 100 \times (T - S)/S$$

(where T is the weight of the insoluble fraction obtained by placing the components [A] and [B] in acetone and separating the insoluble fraction and the soluble fraction; and S is the weight of the rubber polymer in the components [A] or [B]).

The limiting viscosity [η] (measured at 30°C using methyl ethyl ketone as the solvent) of the acetone-insoluble fraction in each of the components [A] and [B] is preferably 0.2 to 1.2 dl/g, more preferably 0.2 to 1 dl/g, and particularly preferably 0.3 to 0.8 dl/g.

The components [A] and [B] can each be manufactured by polymerizing a vinyl monomer in the presence of a rubber component. Emulsion polymerization, suspension polymerization, block polymerization, solution polymerization, a polymerization method in which these methods are combined, or another known method may be applied as the polymerization method. The preferred polymerization method among these is emulsion polymerization. No particular limitation is placed on the polymerization conditions, and known polymerization conditions may be employed.

The components [C], [D], and [E] may be manufactured using vinyl monomers by emulsion polymerization, suspension polymerization, block polymerization, solution polymerization, a polymerization method in which these methods are combined, or another known method. The preferred methods are suspension polymerization, block polymerization, and solution polymerization. The polymerization conditions are not subject to any particular limitation, and manufacturing can be performed using known polymerization conditions.

The thermoplastic resin composition 1 of the present invention contains at least one of components [A], [B], and [C]. The quantities of components [A], [B], and [C] contained in the thermoplastic resin composition 1 of the present invention, wherein the total of these quantities is 100 mass% (including at least one of components [B] and [C]), is 40 to 90 mass%, 0 to 40 mass%, and 0 to 60 mass%, respectively; preferably 50 to 85 mass%, 0 to 30 mass%, and 0 to 50 mass%, respectively; more preferably 50 to 85 mass%, 0 to 30 mass%, and 5 to 50 mass%, respectively; and more preferably 50 to 80 mass%, 3 to 25 mass%, and 5 to 40 mass%, respectively. The coefficient of linear expansion increases and the dimensional precision of the molded article declines if the content of the component [A] is less than 40 mass%, whereas the coating properties suffer if this content is more than 90 mass%. The coefficient of linear expansion increases and the dimensional precision of the molded article declines if the content of the component [B] is more than 40 mass%. Flexibility suffers of the content of the component [C] is over 60 mass%.

The components preferably contained in the thermoplastic resin composition 1 are as shown below, and the content ratios of each component are in accordance with the above description.

    (1) A composition containing [A], [B], and [C]
    (2) A composition containing [A] and [B]
    (3) A composition containing [A] and [C]

The content of bonded vinyl cyanide compounds in the acetone-soluble fraction of the thermoplastic resin composition of the present invention is 27 to 50 mass% with respect to the acetone-soluble fraction. This content is preferably 27 to 45 mass%, and more preferably 30 to 45 mass%. A content of less than 27 mass% is not preferred because the coating properties are adversely affected, whereas a content of over 50 mass% is not preferred because the hue of the molded article is adversely affected.

The quantities of components [A], [B], [D], and [E] contained in the thermoplastic resin composition 2 of the present invention, wherein the total of these quantities is 100 mass%, is 40 to 90 mass%, 0 to 40 mass%, 5 to 60 mass%, and 0 to 30 mass%, respectively; more preferably 50 to 85 mass%, 0 to 30 mass%, 5 to 50 mass%, and 0 to 28 mass%; and more preferably 5 to 80 mass%, 3 to 25 mass%, 5 to 40 mass%, and 5 to 25 mass% (where [B] and [E] are arbitrary components).

The reasons for limiting the numerical values of the components [A] and [B] are the same as those for thermoplastic resin composition 1.

The coating properties are adversely affected if the content of component [D] is less than 5 mass%, whereas a content of over 60 mass% thereof is also not preferred because the molding workability and the hue of the molded article are adversely affected.

A content of component [E] of more than 30 mass% is not preferred because the coating properties decline.

The content of bonded vinyl cyanide compounds in the acetone-soluble fraction of the thermoplastic resin composition of the present invention is preferably 25 to 50 mass%, more preferably 27 to 50 mass%, more preferably 27 to 45 mass%, and particularly preferably 30 to 45 mass% with respect to the acetone-soluble fraction.

The acrylic rubber reinforced resin [A] constituting the thermoplastic resin compositions 1 and 2 is obtained by polymerization of 30 to 95 mass% of the vinyl monomer (a2) comprising an aromatic vinyl compound and a vinyl cyanide compound in the presence of 5 to 70 mass% of an acrylic rubber polymer, wherein the total content of the acrylic rubber polymer (a1) and the vinyl monomer (a2) is 100 mass%. The acrylic rubber polymer is preferably in a ratio of 5 to 65 mass%, and the vinyl monomer is preferably in a ratio of 35 to 95 mass%. If the acrylic rubber polymer content is too low or the vinyl monomer content is too high, the impact resistance of the molded article declines. Conversely, too high an acrylic rubber polymer content or too low a vinyl monomer content is also not preferred because the surface appearance and hardness of the molded article decline.

The diene rubber reinforced resin [B] constituting the thermoplastic resin compositions 1 and 2 is obtained by polymerization of 30 to 95 mass% of the vinyl monomer (b2) comprising an aromatic vinyl compound and a vinyl cyanide compound in the presence of 5 to 70 mass% of an acrylic rubber polymer, wherein the total content of the diene rubber polymer (b1) and the vinyl monomer (b2) is 100 mass%. The diene rubber polymer is preferably in a ratio of 5 to 65 mass%, and the vinyl monomer is preferably in a ratio of 35 to 95 mass%. If the diene rubber polymer content is too low or the vinyl monomer content is too high, the impact resistance of the molded article declines. Conversely, too high a diene rubber polymer content or too low a vinyl monomer content is also not preferred because the surface appearance and hardness of the molded article decline.

The limiting viscosity [η] (measured at 30˚C using methyl ethyl ketone as the solvent) of the acetone-insoluble fraction in each of the components [C], [D], and [E] is preferably 0.2 to 1.2 dl/g, more preferably 0.2 to 1 dl/g, and particularly preferably 0.3 to 0.8 dl/g.

Other polymers may also be added to the thermoplastic resin compositions 1 and 2 besides the components [A], [B], [D], and [E]. Examples of other polymers are (co)polymers of vinyl monomers, and the like.

The flexural modulus of the thermoplastic resin compositions 1 and 2 of the present invention, as measured according to ISO 178, is 1000 to 2200 MPa, more preferably 1200 to 2100 MPa, and particularly preferably 1500 to 2000 MPa. The thermoplastic resin compositions 1 and 2 of the present invention have particularly excellent flexibility because the flexural modulus thereof is in the range.

The coefficient of linear expansion of the thermoplastic resin compositions 1 and 2 of the present invention is $10 \times 10^{-5}$/˚C or below, preferably $9.7 \times 10^{-5}$/˚C or below, and more preferably $8.0 \times 10^{-5}$/8C to $9.3 \times 10^{-5}$/˚C Since the thermoplastic resin compositions 1 and 2 of the present invention have a low coefficient of linear expansion in the aforementioned range, the molded article has adequate dimensional precision. The coefficient of linear expansion is a value measured by the method described in the examples described hereinafter.

The flexural modulus and coefficient of linear expansion can be adjusted, for example, by adjusting the gel content of the acrylic rubber polymer (a1), the content of the acrylic rubber polymer (a1) and the diene rubber polymer (b1), the content of the components [A] through [E], the composition ratios and graft ratios of the vinyl monomers (a2) through (e2), and the like.

5. Additives

Flame retardants, fillers, colorants, metal powder, reinforcing agents, plasticizers, compatibilizers, thermal stabilizers, optical stabilizers, antioxidants, UV absorbers, antistatic agents, lubricants, and other additives may be appropriately added insofar as they do not adversely affect the physical properties and appearance of the thermoplastic resin compositions 1 and 2 of the present invention.

A phosphoric acid compound may be added as the flame retardant; for example, ammonium polyphosphate, triethyl phosphate, tricresyl phosphate, and the like. The added quantity thereof can be set to 1 to 20 mass%, where the thermoplastic resin composition constitutes 100 mass%.

The fillers include glass fiber, carbon fiber, wollastonite, talc, mica, kaolin, glass beads, glass flakes, milled fibers, zinc oxide whiskers, potassium titanate whiskers, and the like. The added quantity of the filler can be set to 1 to 50 mass%, where the thermoplastic resin composition constitutes 100 mass%.

Furthermore, organic pigments, organic dyes, inorganic pigments, and the like may be added as colorants.

6. Thermoplastic resin compositions 1 and 2 and manufacturing method thereof

Mixing for manufacturing the thermoplastic resin compositions 1 and 2 of the present invention is performed by a single-screw extruder, twin-screw extruder, Banbury mixer, pressure kneader, two-roll kneader, other kneader, or the like. At this time, kneading may be performed using a multi-step addition system even when the components are kneaded in one batch.

The thermoplastic resin compositions 1 and 2 of the present invention can be made into a molded article of the desired shape, for example, a molded article exposed to the atmosphere that is used in an automobile or the like used outdoors, by injection molding, sheet extrusion molding, vacuum molding, profile extrusion molding, compression molding, hollow molding, differential pressure molding, blow molding, structural foaming, gas injection molding, or other known molding methods. Thus, the thermoplastic resin compositions 1 and 2 of the present invention can be appropriately used as the molding material for a molded article. The thermoplastic resin compositions 1 and 2 of the present invention can be used in an appropriate manner, particularly as a thermoplastic resin composition for a molded article for an automobile exterior.

7. Automobile exterior molded article and manufacturing method thereof

The automobile exterior molded article of the present invention is a molded article obtained by molding the thermoplastic resin composition of the thermoplastic resin compositions 1 and 2 of the present invention. The automobile exterior molded article of the present invention has excellent dimensional precision, and also excellent coating properties, weather resistance, peel properties, and flexibility. Specific examples of the automobile exterior molded article of the present invention are an automobile exterior side panel, side molding, fender panel, pillar guard, front grille, and the like.

The automobile exterior molded article of the present invention is manufactured by molding the thermoplastic resin composition of the thermoplastic resin compositions 1 and 2 of the present invention into a prescribed shape. The molding method is not subject to any particular limitation, and examples thereof include injection molding, sheet extrusion molding, vacuum molding, profile extrusion molding, compression molding, hollow molding, differential pressure molding, blow molding, structural foaming, gas injection molding, and various other known molding methods and the like.

BEST MODE FOR CARRYING OUT THE INVENTION

The present invention will be described hereinafter based on examples. The present invention is not limited by the examples described below, insofar as the examples do not deviate from the essence of the present invention. In the following examples, "parts" and "%" refer to "mass parts" and "mass%" unless otherwise particularly specified.

The following components [A], [B], [D], and [E] of the thermoplastic resin composition were used in the present examples.

(1) Component [A]

70 parts of styrene and 30 parts of acrylonitrile were mixed together, and a monomer mixture (I) was prepared. 45 parts (solid content equivalent) of acrylic rubber polymer latex having a weight-average particle diameter of 200 nm, and 100 parts of water were placed in a glass flask with an internal volume of 7 liters provided with a stirring device, and the temperature was increased to 40˚C while the mixture was stirred in a nitrogen gas stream. When a temperature of 40˚C was reached, 86% of an aqueous solution (hereinafter abbreviated as "RED aqueous solution") in which 0.3 part of dextrose, 1.2 parts of sodium pyrophosphate, and 0.01 part of ferrous sulfate were dissolved in 20 parts of water, and 30% of an aqueous solution (hereinafter abbreviated as "CAT aqueous solution") in which 0.4 part of t-butyl hydroperoxide (hereinafter abbreviated as "BHP") and 2.4 parts of disproportionate potassium rosinate were dissolved in 30 parts of water were placed in a reactor, the monomer mixture (I)/CAT aqueous solution were then immediately added thereto in continuous fashion for 3 hours/3 hours 30 minutes, respectively, and polymerization was initiated. The temperature was increased to 75˚C from the temperature at the start of polymerization, and the temperature of the system was then maintained at 75˚C. The remaining 14% of the RED aqueous solution was placed in the reactor 180 minutes after the start of polymerization, the system was maintained at the same temperature for 60 minutes, polymerization was substantially completed, and a graft copolymer latex was obtained. This graft copolymer latex was coagulated, rinsed, and dried, and an acrylic rubber reinforced resin was obtained that was a particulate graft copolymer.

The content of acrylic rubber polymer in the acrylic rubber reinforced resin thus obtained was 32%, the polymerization conversion rate thereof was 97%, the graft rate thereof was 40%, and the limiting viscosity thereof was 0.6 dl/g.

(2) Component [B]

100 parts of deionized water, 1.5 parts of dodecyl benzene sodium sulfonate, 0.1 part of *t*-dodecyl mercaptan, 50 parts (solid content equivalent) of polybutadiene latex having a weight-average particle diameter of 320 nm, 10 parts of styrene, and 3 parts of acrylonitrile were added to a glass flask with an internal volume of 7 liters provided with a stirring device, and the temperature was increased while the mixture was stirred. When the temperature reached 45°C, an activator aqueous solution composed of 0.1 part of sodium ethylene diamine tetraacetate, 0.003 part of ferrous sulfate, 0.2 part of formaldehyde sodium sulfoxylate dehydrate, and 15 parts of deionized water, and 0.1 part of diisopropylbenzene hydroperoxide were added, and reaction was continued for one hour. An incremental polymerization component composed of 50 parts of deionized water, 1 part of sodium dodecyl benzene sulfonate, 0.1 part of *t*-dodecyl mercaptan, 0.2 part of diisopropyl hydroperoxide, 27 parts of styrene, and 10 parts of acrylonitrile was then continuously added over a period of three hours, and the polymerization reaction was continued. After this addition was completed, stirring was further continued for one hour, and polymerization was substantially completed. 0.2 part of 2,2-methylene-*bis*-(4-ethylene-6-*t*-butylphenol) was then added, and the reaction product was removed from the flask. After the latex that was the reaction product was coagulated with 2 parts of calcium chloride and the reaction product was thoroughly rinsed, the product was dried for 24 hours at 75°C, and a white powder diene rubber reinforced resin was obtained.
The polybutadiene content in the diene rubber reinforced resin thus obtained was 51%, the polymerization conversion rate thereof was 97.2%, the graft rate thereof was 50%, and the limiting viscosity thereof was 0.3 dl/g.

(3) Component [D]

The AS resin below, synthesized by suspension polymerization, was used.
Composition: styrene/acrylonitrile = 60/40 (mass%)
Limiting viscosity: 0.4 dl/g

(4) Component [E]

The AS resin below, synthesized by solution polymerization, was used.
Composition: styrene/acrylonitrile = 76/24 (mass%)
Limiting viscosity: 0.6 dl/g

Test Sample Formation

Components [A] through [E] were mixed for three minutes in a mixer to obtain the compositions shown in Table 1 below. The product was then melted and extruded into pellets using a 50 mm extruder with the cylinder temperature thereof set to 200 to 230°C. After the pellets thus obtained were thoroughly dried, injection molding was performed at a cylinder temperature of 220°C and a die temperature of 50°C, and evaluation samples were obtained.
Performance testing of the flexural modulus, coefficient of linear expansion, coating properties, and peel properties was performed using these evaluation samples. The performance evaluations are shown in Table 1.

Table 1

| | | | | Example | | | Comparative Example | | | |
|---|---|---|---|---|---|---|---|---|---|---|
| | | | | 1 | 2 | 3 | 1 | 2 | 3 | 4 |
| Content | | Component [A] | Mass % | 70 | 65 | 70 | 35 | 25 | 45 | 45 |
| | | Component [B] | Mass % | 10 | 0 | 10 | 45 | 10 | 15 | 15 |
| | | Component [D] | Mass % | 20 | 35 | 10 | 20 | 65 | 0 | 3 |
| | | Component [E] | Mass % | 0 | 0 | 10 | 0 | 0 | 40 | 47 |
| | | Rubber content in composition | Mass % | 27 | 21 | 27 | 34 | 13 | 22 | 22 |
| | | Bonded vinyl cyanide content in acetone-soluble fraction | Mass % | 33 | 35 | 31 | 33 | 38 | 26 | 26 |

(continued)

| | | | Example | | | Comparative Example | | | |
|---|---|---|---|---|---|---|---|---|---|
| | | | 1 | 2 | 3 | 1 | 2 | 3 | 4 |
| | | Units | | | | | | | |
| | Flexural modulus | MPa | 1780 | 2130 | 1750 | 1310 | 2590 | 2090 | 2120 |
| Performance Evaluation | Coefficient of linear expansion | $\times 10^{-5}/^{\circ}C$ | 9.0 | 8.6 | 9.0 | 12.6 | 8.1 | 11.4 | 10.5 |
| | Coating properties | | ◎ | ○ | ○ | ○ | ○ | × | × |
| | Peel properties | | ○ | ○ | ○ | ○ | × | × | × |

Performance Evaluation Methods

(1) Flexural modulus

Measurement was performed in accordance with ISO 178.

(2) Coefficient of linear expansion

After a 50 mm×10 mm×4-mm test sample obtained by injection molding was annealed for two hours at 80˚C, the length of the molded article as a standard was measured in an atmosphere at 23˚C. The length of the molded article was then measured at temperatures of 30˚C, 50˚C, and 70˚C, and the average rate of change in length per degree Celsius from 23˚C to 70˚C was used as the coefficient of linear expansion (units: $\times 10^{-5}/^{\circ}C$). The length of the molded article was measured using a Laser Scan Micrometer 1000 manufactured by Mitutoyo Corporation.

(3) Coating properties

A coating material ("Retan 60-202" (manufactured by Kansai Paint Co., Ltd.)) was applied to a 150×70×3-mm (t) test sample to obtain a film thickness of 20 $\mu$m, and setting was performed for five minutes after coating. The sample was then baked for 0.5 hours at 80˚C. The test sample thus obtained was visually evaluated for absorption and other aspects of surface appearance.
The coating appearance was evaluated according to the following four steps for visible color irregularity occurring on the surface thereof. Specifically, in Table 1, "◎" indicates no color irregularity. "○" indicates almost no color irregularity. "Δ" indicates slight color irregularity. "×" indicates significant color irregularity.

(4) Peel properties

Using an 80×55×1.6-mm (t) film gate test sample, a 20-mm cut was made in a position 40 mm from the middle of the end portion using a nipper, the sample was torn apart, and the cracked surface was observed for visual evaluation. Samples in which the cross-section of the tear was not stratified and surface peeling was not apparent were designated as "○," samples in which the cross-section of the tear was stratified but surface peeling was not apparent were designated as "Δ," and samples in which the cross-section of the tear was stratified and surface peeling was apparent were designated as "×."

(5) Measurement method for content of bonded vinyl cyanide compounds in the acetone-soluble fraction

1 g of the thermoplastic resin composition was placed in 20 mL of acetone, the product was shaken for 2 hours by a shaking device, the product was centrifuged for 60 minutes by a centrifuge (rotational speed: 23,000 rpm), the insoluble and soluble fractions were separated, the soluble fraction was dried, nitrogen was determined by elemental analysis, and the content of bonded vinyl cyanide compounds was calculated.

Effects of Examples

As shown in Table 1, component [B] in Comparative Example 1 exceeded the range of the present invention, the coefficient of linear expansion was large, and the result was not preferred.

In Comparative Example 2, the rubber content was less than the range of the present invention, the flexibility was inferior, peeling defects were observed, and the result was not preferred.

The bonded vinyl cyanide monomer content in Comparative Examples 3 and 4 was outside the range of the present invention, the coating properties were inferior, peeling defects were observed, and the results were not preferred.

In contrast, as shown in Table 1, Examples 1 through 3 had excellent performance in every respect, and balanced performance was obtained.

INDUSTRIAL APPLICABILITY

The thermoplastic resin composition of the present invention has excellent coating properties, weather resistance, peel properties, and flexibility; the coefficient of linear expansion thereof is kept small; and the molded article has excellent dimensional precision and the like. Therefore, the thermoplastic resin composition of the present invention can be used as a molding material for an automobile exterior side panel, side molding, fender panel, pillar guard, front grille, or other molded article.

**Claims**

1. A thermoplastic resin composition, **characterized in that** said composition comprises 40 to 90 mass% of component [A], 0 to 40 mass% of component [B], and 0 to 60 mass% of component [C] below (where at least one of component [B] and component [C] is contained therein, and the total content of component [A], component [B], and component [C] is 100 mass%); the total content of the acrylic rubber polymer (a1) constituting component [A] below and the diene rubber polymer (b1) constituting component [B] below is 15 to 50 mass% with respect to the total quantity of the thermoplastic resin composition; the content of bonded vinyl cyanide compounds in the acetone-soluble fraction of the thermoplastic resin composition is 27 to 50 mass% with respect to the acetone-soluble fraction; the coefficient of linear expansion is $10 \times 10^{-5}/{}^{\circ}C$ or less; and the flexural modulus according to ISO 178 is 1000 to 2200 MPa; where

   component [A]: An acrylic rubber reinforced resin obtained by polymerizing 30 to 95 mass% of a vinyl monomer (a2) comprising an aromatic vinyl compound and a vinyl cyanide compound in the presence of 5 to 70 mass% of an acrylic rubber polymer (a1) (where the total content of (a1) and (a2) is 100 mass%);
   component [B]: A diene rubber reinforced resin obtained by polymerizing 30 to 95 mass% of a vinyl monomer (b2) comprising an aromatic vinyl compound and a vinyl cyanide compound in the presence of 5 to 70 mass% of a diene rubber polymer (b1) (where the total content of (b1) and (b2) is assumed to be 100 mass%);
   component [C]: A copolymer of a vinyl monomer (c2) comprising an aromatic vinyl compound and a vinyl cyanide compound. ,

2. A thermoplastic resin composition, **characterized in that** the composition comprises 40 to 90 mass% of component [A], 0 to 40 mass% of component [B], 5 to 60 mass% of component [D], and 0 to 30 mass% of component [E] below (where the total content of component [A], component [B], component [D], and component [E] is 100 mass%); the total content of the acrylic rubber polymer (a1) constituting component [A] below and the diene rubber polymer (b1) constituting component [B] below is 15 to 50 mass% with respect to the total quantity of the thermoplastic resin composition; the coefficient of linear expansion is $10 \times 10^{-5}/{}^{\circ}C$ or less; and the flexural modulus according to ISO 178 is 1000 to 2200 MPa; where

   component [A]: An acrylic rubber reinforced resin obtained by polymerizing 30 to 95 mass% of a vinyl monomer (a2) comprising an aromatic vinyl compound and a vinyl cyanide compound in the presence of 5 to 70 mass% of an acrylic rubber polymer (a1) (where the total content of (a1) and (a2) is assumed to be 100 mass%);
   component [B]: A diene rubber reinforced resin obtained by polymerizing 30 to 95 mass% of a vinyl monomer (b2) comprising an aromatic vinyl compound and a vinyl cyanide compound in the presence of 5 to 70 mass% of a diene rubber polymer (b1) (where the total content of (b1) and (b2) is assumed to be 100 mass%);
   component [D]: A copolymer of a vinyl monomer (d2) comprising an aromatic vinyl compound and a vinyl cyanide compound, wherein the bonded vinyl cyanide content is 30 to 50 mass% ;
   component [E]: A copolymer of a vinyl monomer (e2) comprising an aromatic vinyl compound and a vinyl cyanide compound, wherein the bonded vinyl cyanide content is less than 30 mass%.

3. A thermoplastic resin composition for an automobile exterior molded article, **characterized in** comprising the thermoplastic resin composition according to claim 1 or 2.

4. An automobile exterior molded article, **characterized in** being obtained by molding the thermoplastic resin composition according to claim 1 or 2.

5. A manufacturing method for an automobile exterior molded article, **characterized in** molding the thermoplastic resin composition according to claim 1 or 2 and manufacturing an automobile exterior molded article.

6. The manufacturing method for an automobile exterior molded article according to claim 5, wherein the molding is performed by injection molding, sheet extrusion molding, vacuum molding, profile extrusion molding, compression molding, hollow molding, differential pressure molding, blow molding, structural foaming, or gas injection molding.

**Patentansprüche**

1. Thermoplastische Harzzusammensetzung, **dadurch gekennzeichnet, dass** die Zusammensetzung 40 bis 90 Massen% von unterem Bestandteil [A], 0 bis 40 Massen% von unterem Bestandteil [B] und 0 bis 60 Massen% von unterem Bestandteil [C] umfasst (wobei zumindest einer von Bestandteil [B] und Bestandteil [C] darin enthalten ist, und der Gesamtgehalt von Bestandteil [A], Bestandteil [B] und Bestandteil [C] 100 Massen% ist); der Gesamtgehalt des Acrylkautschukpolymers (a1), der den unteren Bestandteil [A] bildet, und des Dienkautschukpolymers (b1), das den unteren Bestandteil [B] bildet, 15 bis 50 Massen% bezüglich der Gesamtmenge der thermoplastischen Harzzusammensetzung ist; der Gehalt von gebundenen Vinylcyanidverbindungen in der acetonlöslichen Fraktion der thermoplastischen Harzzusammensetzung 27 bis 50 Massen% bezüglich der acetonlöslichen Fraktion ist; der Längenausdehnungskoeffizient $10 \times 10^{-5}/°C$ oder weniger ist; und das Biegemodul gemäß ISO 178 1000 bis 2200 MPa ist; wobei

Bestandteil [A]: ein verstärktes Acrylkautschukharz, das durch Polymerisieren von 30 bis 95 Massen% eines Vinylmonomers (a2), das eine aromatische Vinylverbindung und eine Vinylcyanidverbindung umfasst, in der Gegenwart von 5 bis 70 Massen% eines Acrylkautschukpolymers (a1) erhalten ist (wobei der Gesamtgehalt von (a1) und (a2) 100 Massen% ist);
Bestandteil [B]: ein verstärktes Dienkautschukharz, das durch Polymerisieren von 30 bis 95 Massen% eines Vinylmonomers (b2), das eine aromatische Vinylverbindung und eine Vinylcyanidverbindung umfasst, in der Gegenwart von 5 bis 70 Massen% eines Dienkautschukpolymers (b1) erhalten ist (wobei für den Gesamtgehalt von (b1) und (b2) 100 Massen% angenommen werden);
Bestandteil [C]: ein Copolymer eines Vinylmonomers (c2), das eine aromatische Vinylverbindung und eine Vinylcyanidverbindung umfasst.

2. Thermoplastische Harzzusammensetzung, **dadurch gekennzeichnet, dass** die Zusammensetzung 40 bis 90 Massen% von unterem Bestandteil [A], 0 bis 40 Massen% von unterem Bestandteil [B], 5 bis 60 Massen% von unterem Bestandteil [D] und 0 bis 30 Massen% von unterem Bestandteil [E] umfasst (wobei der Gesamtgehalt von Bestandteil [A], Bestandteil [B], Bestandteil [D] und Bestandteil [E] 100 Massen% ist); der Gesamtgehalt des Acrylkautschukpolymers (a1), das den unteren Bestandteil [A] bildet, und des Dienkautschukpolymers (b1), das den unteren Bestandteil [B] bildet, 15 bis 50 Massen% bezüglich der Gesamtmenge der thermoplastischen Harzzusammensetzung ist; der Längsausdehnungskoeffizient $10 \times 10^{-5}/°C$ oder weniger ist; und das Biegemodul gemäß ISO 178 1000 bis 2200 MPa ist; wobei

Bestandteil [A]: ein verstärktes Acrylkautschukharz, das durch Polymerisieren von 30 bis 95 Massen% eines Vinylmonomers (a2), das eine aromatische Vinylverbindung und eine Vinylcyanidverbindung umfasst, in der Gegenwart von 5 bis 70 Massen% eines Acrylkautschukpolymers (a1) erhalten ist (wobei der Gesamtgehalt von (a1) und (a2) 100 Massen% ist);
Bestandteil [B]: ein verstärktes Dienkautschukharz, das durch Polymerisieren von 30 bis 95 Massen% eines Vinylmonomers (b2), das eine aromatische Vinylverbindung und eine Vinylcyanidverbindung umfasst, in der Gegenwart von 5 bis 70 Massen% eines Dienkautschukpolymers (b1) erhalten ist (wobei für den Gesamtgehalt von (b1) und (b2) 100 Massen% angenommen werden);
Bestandteil [D]: ein Copolymer eines Vinylmonomers (d2), das eine aromatische Vinylverbindung und eine Vinylcyanidverbindung umfasst, wobei der Gehalt des gebundenen Vinylcyanids 30 bis 50 Massen% ist;
Bestandteil [E]: ein Copolymer eines Vinylmonomers (e2), das eine aromatische Vinylverbindung und eine Vinylcyanidverbindung umfasst, wobei der Gehalt des gebundenen Vinylcyanids weniger als 30 Massen% ist.

3. Thermoplastische Harzzusammensetzung für ein Außenformteil eines Automobils, **dadurch gekennzeichnet,**

**dass** die thermoplastischen Harzzusammensetzung nach Anspruch 1 oder 2 umfasst ist.

4. Außenformteil eines Automobils, **dadurch gekennzeichnet, dass** es durch Formen der thermoplastischen Harzzusammensetzung nach Anspruch 1 oder 2 erhalten ist.

5. Herstellungsverfahren für ein Außenformteil eines Automobils, **gekennzeichnet durch** Formen der thermoplastischen Harzzusammensetzung nach Anspruch 1 oder 2 und Herstellen eines Außenformteils eines Automobils.

6. Herstellungsverfahren für ein Außenformteil eines Automobils nach Anspruch 5, wobei das Formen durch Spritzgießen, Folienstrangpressen, Vakuumformen, Profilstrangpressen, Formpressen, Hohlstrangpressen, Differenzdruckformen, Blasformen, Strukturschäumen oder Gasspritzgießen durchgeführt wird.

**Revendications**

1. Composition de résine thermoplastique, **caractérisée en ce que** ladite composition comprend 40 à 90% en masse de composant [A], 0 à 40% en masse de composant [B], et 0 à 60% en masse de composant [C] ci-dessous (où au moins l'un des composant [B] et composant [C] est contenu dedans, et la teneur totale en composant [A], composant [B], et composant [C] est de 100% en masse) ; la teneur totale du polymère de caoutchouc acrylique (a1) constituant le composant [A] ci-dessous et du polymère de caoutchouc diène (b1) constituant le composant [B] ci-dessous est de 15 à 50% en masse par rapport à la quantité totale de la composition de résine thermoplastique ; la teneur des composés cyanure de vinyle liés dans la fraction soluble dans l'acétone de la composition de résine thermoplastique est de 27 à 50% en masse par rapport à la fraction soluble dans l'acétone ; le coefficient de dilatation linéaire est de $10 \times 10^{-5}/°C$ ou moins ; et le module d'élasticité en flexion selon l'ISO 178 est de 1 000 à 2 200 MPa ; où

   composant [A] : une résine renforcée par un caoutchouc acrylique obtenue par polymérisation de 30 à 95% en masse d'un monomère vinyle (a2) comprenant un composé vinyle aromatique et un composé cyanure de vinyle en présence de 5 à 70% en masse d'un polymère de caoutchouc acrylique (a1) (où la teneur totale en (a1) et (a2) est de 100% en masse) ;
   composant [B] : une résine renforcée par un caoutchouc diène obtenue par polymérisation de 30 à 95% en masse d'un monomère vinyle (b2) comprenant un composé vinyle aromatique et un composé cyanure de vinyle en présence de 5 à 70% en masse d'un polymère de caoutchouc diène (b1) (où la teneur totale en (b1) et (b2) est supposée être de 100% en masse) ;
   composant [C] : un copolymère d'un monomère vinyle (c2) comprenant un composé vinyle aromatique et un composé cyanure de vinyle.

2. Composition de résine thermoplastique, **caractérisée en ce que** la composition comprend 40 à 90% en masse de composant [A], 0 à 40% en masse de composant [B], 5 à 60% en masse de composant [D], et 0 à 30% en masse de composant [E] ci-dessous (où la teneur totale en composant [A], composant [B], composant [D], et composant [E] est de 100% en masse) ; la teneur totale du polymère de caoutchouc acrylique (a1) constituant le composant [A] ci-dessous et du polymère de caoutchouc diène (b1) constituant le composant [B] ci-dessous est de 15 à 50% en masse par rapport à la quantité totale de la composition de résine thermoplastique ; le coefficient de dilatation linéaire est de $10 \times 10^{-5}/°C$ ou moins ; et le module d'élasticité en flexion selon l'ISO 178 est de 1 000 à 2 200 MPa ; où

   composant [A] : une résine renforcée par un caoutchouc acrylique obtenue par polymérisation de 30 à 95% en masse d'un monomère vinyle (a2) comprenant un composé vinyle aromatique et un composé cyanure de vinyle en présence de 5 à 70% en masse d'un polymère de caoutchouc acrylique (a1) (où la teneur totale en (a1) et (a2) est supposée être de 100% en masse) ;
   composant [B] : une résine renforcée par un caoutchouc diène obtenue par polymérisation de 30 à 95% en masse d'un monomère vinyle (b2) comprenant un composé vinyle aromatique et un composé cyanure de vinyle en présence de 5 à 70% en masse d'un polymère de caoutchouc diène (b1) (où la teneur totale en (b1) et (b2) est supposée être de 100% en masse) ;
   composant [D] : un copolymère d'un monomère vinyle (d2) comprenant un composé vinyle aromatique et un composé cyanure de vinyle, dans lequel la teneur en cyanure de vinyle lié est de 30 à 50% en masse ;
   composant [E] : un copolymère d'un monomère vinyle (e2) comprenant un composé vinyle aromatique et un composé cyanure de vinyle, dans lequel la teneur en cyanure de vinyle lié est inférieure à 30% en masse.

3. Composition de résine thermoplastique pour un article moulé extérieur d'automobile, **caractérisée en ce qu'**elle comprend la composition de résine thermoplastique selon la revendication 1 ou 2.

4. Article moulé extérieur d'automobile, **caractérisé en ce qu'**il est obtenu par moulage de la composition de résine thermoplastique selon la revendication 1 ou 2.

5. Procédé de fabrication d'un article moulé extérieur d'automobile, **caractérisé par** le moulage de la composition de résine thermoplastique selon la revendication 1 ou 2 et la fabrication d'un article moulé extérieur d'automobile.

6. Procédé de fabrication d'un article moulé extérieur d'automobile selon la revendication 5, dans lequel le moulage est réalisé par un moulage par injection, un moulage par extrusion de feuilles, un moulage sous vide, un moulage par extrusion de profilés, un moulage par compression, un moulage en creux, un moulage par pression différentielle, un moulage par soufflage, un moulage de mousse structurée, ou un moulage par injection de gaz.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5171006 A